# EUROPEAN PATENT APPLICATION

(11) **EP 4 773 035 A1**
(43) Date of publication of application: **08.07.2026**
(21) Application number: 25227739.7
(22) Date of filing: 30.12.2025
(51) Int. Cl.: G06F 40/20, G06N 3/08, G06N 3/084, G06N 3/096, G06N 5/04, G06N 20/00

(54) **SYSTEM AND METHOD FOR ENHANCING LARGE LANGUAGE MODELS WITH NEXT THOUGHT PREDICTION COGNITION USING NOVEL TOKENS**

(30) Priority: 02.01.2025 US 202519008190
(71) Applicant: ABB SCHWEIZ AG, 5400 Baden (CH)
(72) Inventor: HETRICH, Matthew, Cary, 27519 (US); RAKUFF, Stefan, Garner, 27529 (US)
(74) Representative: Maiwald GmbH

(57) **Abstract**

A method for enhancing a large-language model (LLM) with next thought generation is provided. The method includes augmenting training data associated with the LLM based on a set of thought tokens arranged in a structure. The LLM is trained on the augmented training data using a computer to generate a trained LLM. A response to a query received at the trained LLM is determined. The trained LLM predicts a series of next steps as a logical progression following the response based on the set of thought tokens to simulate agent-like behavior.

## Description

### FIELD

The present disclosure relates to large language models. In particular, the present disclosure relates to enhancing large language models to perform reasoning tasks.

### BACKGROUND

Conventional large language models (LLMs) are primarily designed to predict a next token based on statistical patterns derived from training data. While this approach is effective for many tasks, it cannot capture higher-level cognitive processes such as reasoning, thought prediction, and intentionality. This causes failures in conversational artificial intelligence (AI), text summarization, question answering, agents and software development.

### SUMMARY

A first aspect of the present disclosure provides a method for enhancing a large-language model (LLM) with next thought generation, the method includes augmenting training data associated with the LLM based on a set of thought tokens arranged in a structure, training, using a computer, the LLM on the augmented training data, to generate a trained LLM, determining a response to a query received at the trained LLM from a user, and predicting, using the trained LLM, a series of next steps as a logical progression following the response based on the set of thought tokens to simulate agent-like behavior.

According to an implementation of the first aspect, the set of thought tokens are arranged in a hierarchical structure, and wherein the hierarchical structure divides the query received at the LLM into smaller tasks, which are then used by the LLM to predict the series of next steps.

According to an implementation of the first aspect, the set of thought tokens are arranged in a nested recursive structure, and wherein the recursive structure divides the query received at the LLM into smaller tasks, which are then used by the LLM to predict the series of next steps.

According to an implementation of the first aspect, the training data is augmented by expanding the underlying vocabulary of the LLM.

According to an implementation of the first aspect, the training data is augmented by modifying existing tokens with the set of thought tokens to generate pseudo-new-tokens.

According to an implementation of the first aspect, the LLM is augmented by incorporating the set of thought tokens in training data of the LLM using contextual embeddings.

According to an implementation of the first aspect, the method further includes assigning a respective weight to each of the set of tokens, and prioritizing the set of tokens based on the respective weights assigned to each of the set of tokens.

According to an implementation of the first aspect, augmenting the training data comprises adding the set of tokens to a supervised-fine-tuning dataset of the LLM.

A second aspect of the present disclosure provides a system for enhancing a large-language model (LLM) with next thought generation, the system includes a controller configured to: augment training data associated with the LLM based on a set of thought tokens arranged in a structure, train, using a computer, the LLM on the augmented training data, to generate a trained LLM, determine a response to a query received at the trained LLM from a user, and predict, using the trained LLM, a series of next steps as a logical progression following the response based on the set of thought tokens to simulate agent-like behavior.

According to an implementation of the second aspect, the set of thought tokens are arranged in a hierarchical structure, and wherein the hierarchical structure divides the query received at the LLM into smaller tasks, which are then used by the LLM to predict the series of next steps.

According to an implementation of the second aspect, the set of thought tokens are arranged in a nested recursive structure, and wherein the recursive structure divides the query received at the LLM into smaller tasks, which are then used by the LLM to predict the series of next steps.

According to an implementation of the second aspect, the training data is augmented by expanding the underlying vocabulary of the LLM.

According to an implementation of the second aspect, the training data is augmented by modifying existing tokens with the set of thought tokens to generate pseudo-new-tokens.

According to an implementation of the second aspect, the LLM is augmented by incorporating the set of thought tokens in training data of the LLM using contextual embeddings.

According to an implementation of the second aspect, the controller is further configured to assign a respective weight to each of the set of tokens, and prioritize the set of tokens based on the respective weights assigned to each of the set of tokens.

According to an implementation of the second aspect, augmenting the training data comprises adding the set of tokens to a supervised-fine-tuning dataset of the LLM.

A third aspect of the present disclosure provides a tangible, non-transitory computer-readable medium for enhancing a large-language model (LLM) with next thought generation, the computer-readable medium having instructions thereon, which, upon being executed by one or more processors, provides for execution of the following steps: augmenting training data associated with the LLM based on a set of thought tokens arranged in a structure; training, using a computer, the LLM on the augmented training data, to generate a trained LLM; determining a response to a query received at the trained LLM from a user; and predicting, using the trained LLM, a series of next steps as a logical progression following the response based on the set of thought tokens to simulate agent-like behavior.

According to an implementation of the third aspect, the set of thought tokens are arranged in a hierarchical structure, and wherein the hierarchical structure divides the query received at the LLM into smaller tasks, which are then used by the LLM to predict the series of next steps.

According to an implementation of the third aspect, the set of thought tokens are arranged in a nested recursive structure, and wherein the recursive structure divides the query received at the LLM into smaller tasks, which are then used by the LLM to predict the series of next steps.

According to an implementation of the third aspect, the training data is augmented by expanding the underlying vocabulary of the LLM.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 illustrates a simplified diagram of a system to add thought tokens to a large language model (LLM), according to one or more examples of the present disclosure;
FIG. 2 is a simplified block diagram of one or more devices or systems within the exemplary environment of FIG. 1; and
FIG. 3 illustrates an exemplary process to add thought tokens to a large language model (LLM), according to embodiments of the present disclosure.

### DETAILED DESCRIPTION

Examples of the present application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

Large Language Models (LLMs) are sophisticated neural network-based models that have revolutionized the field of Natural Language Processing (NLP) and Artificial Intelligence. LLMs (e.g., GPT-3, Llama, Phi, etc.) are trained on vast amounts of textual data to learn statistical patterns and context-based relationships between words. LLMs are configured to generate human-like text, perform reasoning tasks, and engage in sophisticated dialogues. LLMs have found applications in various domains, including conversational AI, text summarization, question answering, agents, and software development among many others. Conventional large language models (LLMs) are designed operate by predicting a next token based on statistical patterns designed from training data. While this approach is effective for many tasks, it does not capture higher-level cognitive processes such as reasoning, thought prediction, and intentionality. Without higher-level cognitive processes, conversational AI is unable to maintain coherent and contextually relevant dialogues, leading to user frustration and reduced engagement. LLMs without higher-level cognitive processes have difficulty in capturing the essence and logical flow of a text to generate text summaries, which results in summaries that are incomplete or misleading. In some embodiments, this can also lead to hallucination of the model. LLMs lacking in higher-level cognitive processes face challenges in providing accurate and comprehensive answers that require reasoning, leading to incorrect or partial responses. LLM agents without higher-level cognitive processes lack planning and decision-making capabilities making it difficult for such LLM agents to perform complex tasks autonomously. LLMs without cognitive abilities are also unable to generate logically consistent code, leading to errors or inefficiencies.

In some embodiments, in order to improve the performance of LLMs, a higher-level cognitive functionality is added to the LLMs by incorporating thought tokens. Thought tokens are designed to encapsulate internal reasoning process, similar to human thought patterns. For example, thought tokens may be integrated into a vocabulary of the LLM so that the LLM is enabled to predict a next thought or idea in response to a user query, in addition to the next token. The introduction of thought tokens can intrinsically incorporate Chain-of-Thought (CoT) and Agentic ReACT (Reasoning and Acting) paradigms into an architecture of an LLM. Thought tokens enable the LLM to generate sequences of thoughts that follow a logical progression, similar to human reasoning (CoT). They also allow the model to intrinsically simulate agent-like behavior, making decisions and taking actions based on internal reasoning processes without the additional frameworks, development, with less stochastic risk.

In some cases, incorporating thought tokens into software development and specifically coding LLMs can generate more logically consistent code, follow best practice paradigms, and improve debugging processes through advanced reasoning. In some embodiments, the introduction of thought tokens can lead to substantially more accurate and informative text generation, image analysis, and other modalities (other wavelengths on the electro-magnetic spectrum (ultrasonic, sonic, infrasonic, vision, etc.). This is particularly important for applications where deep understanding and context-aware generation are crucial. This includes complex reasoning within deterministic computer systems to make informed decisions based on internal cognitive processes.

In the context of AI, an agent is a system that can perceive its environment and take actions to achieve specific goals. Agents are used in various applications, including autonomous vehicles, robotics and intelligent assistants. Their characteristics include perception, reasoning, planning, and actions. In some embodiments, the actions taken by the agents may include function calls. In such cases, functions are software tools that perform certain tasks in a deterministic manner. An example for a function call may be a math operation. These agentic systems can be improved by thought tokens to plan more effectively, make better informed decisions, and improve their autonomy substantially.

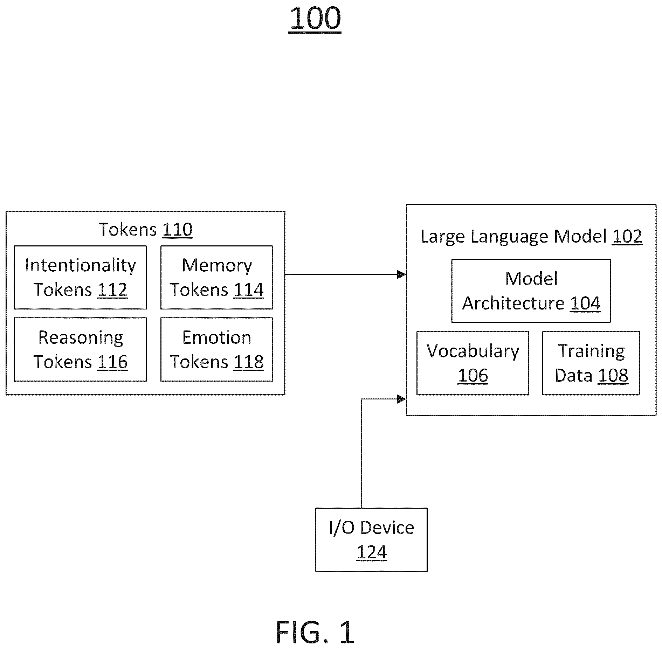

FIG. 1 illustrates a simplified diagram of a system to add thought tokens to a large language model (LLM), according to one or more examples of the present disclosure. System 100 of FIG. 1 includes a large language model (LLM) 102. The LLM includes a model architecture 104, vocabulary 106, training data 108, and tokens 110.

An extensive amount of training data 108 is used in order to properly train an LLM 102. For example, for an English LLM, the training data 108 may include a large and diverse dataset of text that reflects English language patterns. In such cases, the training data 108 may comprise of articles, books, websites, social media posts, and any other form of text. The training data 108 is analyzed to generate a vocabulary 106.

In order to generate a vocabulary 106 based on the training data 108, a tokenization strategy is selected for the LLM 102. For example, the LLM 102 may be configured to generate word-level tokens, sub-word tokens or character level tokens. The selection of the tokenization strategy may be based on balancing available storage and the complexity of training needed for each tokenization strategy. Once a tokenization strategy is selected, the LLM 102 processes the training data 108 to count the frequency of words, sub-words, or characters, based on the selected tokenization strategy. For example, in case the tokenization strategy that is selected by the LLM 102 is to generate sub-word tokens, the LLM 102 identifies the most frequent pairs of characters or sub-words and merges them into tokens. Over many iterations, this builds a set of tokens 110 that efficiently represents common language patterns in the English language.

Once the tokenization is defined, the vocabulary 106 is built by selecting the most frequent tokens 110 until reaching a pre-determined vocabulary size. For example, the LLM 102 may limit its vocabulary to the 50,000 most common tokens, balancing coverage and model size. Each token of the tokens 110 is then assigned a unique ID, so it can be referenced efficiently during model training.

Thus, on the basis of the training data 108, the LLM 102 is able to generate the vocabulary 106 that comprises a dictionary of unique words, word pieces, or symbols that the LLM 102 is able to recognize and use. In some embodiments, the generation of vocabulary 106 balances capturing common language features while minimizing number of tokens 110 associated with the LLM 102.

The use of tokens 110 and the vocabulary 106 form a language for the LLM 102 to understand and respond to textual queries received from a user. The tokens 110 and the vocabulary 106 allow the LLM 102 to understand any query received at the LLM 102 from a user at the I/O device 124 by breaking down the query into familiar tokens. The tokens allow the LLM 102 to understand the query and generate responses accurately.

Embodiments of the present disclosure describe adding additional tokens, such as thought tokens 112 to the LLM in order to enhance the function of the LLM 102 by introducing higher-level cognitive processes such as reasoning, thought prediction, and intentionality. In order to enhance functionality of the LLM 102, a plurality of thought tokens 112 are incorporated into the LLM 102.

In order to incorporate the thought tokens 112 into the LLM 102, a plurality of thought tokens 112 are defined. Each token may correspond to a different cognitive process. In some embodiments, the thought tokens 112 includes reasoning tokens 118, memory tokens 116, intentionality tokens 114, and emotion tokens 120.

In some cases, the reasoning tokens 118 may be used to configure an LLM agent to identify key variables and formulates an equation based on the identified key variables. For example, the reasoning token 118 is configured to capture the logical steps involved in solving a mathematical problem. In such a case, the reasoning token 118 first identifies import elements of the problem, and then the reasoning token 118 creates a mathematical representation of the problem. In some embodiments, the reasoning token 118 for each problem may be divided into two sub-tokens. For example, the <reason: identify the key variables> sub-token represents the first step of identifying the important elements of the problem, while the <reason: formulate an equation> sub-token represents the next step of creating a mathematical representation.

According to some embodiments, the intentionality tokens 118 may be used to configure an LLM agent to achieve the goal of improving customer satisfaction by reducing wait times and enhancing service quality. For example, of the intentionality tokens 118 may be divided into sub-tokens which may be arranged in a sequence as follows:

```
              <intent: improve customer satisfaction> by <intent: reducing
                  wait times> and <intent: enhancing service quality>.
```

Such a sequence of sub-tokens represents the objective of the intentionality tokens 118 and actions that may be used to achieve the objective. For instance, the <intent: improve customer satisfaction> sub-token captures the overall objective, while the <intent: reducing wait times> and <intent: enhancing service quality> sub-tokens represent the specific actions needed to achieve this overall objective.

According to some other embodiments, the memory tokens 116 may be used to configure an LLM agent of the LLM 102 to remember past experiences or memories which can be used to inform current reasoning and decision-making processes. For example, the memory tokens 116, represented as <memory: similar issues were resolved by increasing staff availability> may be used to identify tokens similar to the tokens associated with the memory tokens 116. For example, the LLM agent of the LLM model 102 may use memory tokens 116 to determine that an issue occurring currently was resolved by increasing staff availability in the past. The memory tokens may perform the remembering using agents. The agents may call a function that stores and/or reads memory tokens in a relational database. The function may be based on SQL code to interact with the database or traverse knowledge tree, knowledge graphs, or any other data structure. These structures can be dynamically modified/updated via function calling.

According to some other embodiments, the emotion tokens 120 may be used to capture an emotional state of a user interacting with an LLM agent of the LLM 102. In such cases, the emotional token may be used to tailor responses of the LLM agent of the LLM 102 and improve user experiences. For example, an emotional token 120 represented as <emotion: frustrated> may be used to indicate that a user interacting with an LLM agent of the LLM 120 is frustrated because of the long wait times that the user may be encountering. In some cases, for the LLM 102 and the LLM agent may assign the correct set of thought tokens by identifying a cognitive structure of the user prompt. In order to perform this, the user prompt is broken down into smaller chunks, e.g., its clauses and constituents. To identify grammatical relations and the intended meaning in/of a clause, the constituents may be categorized into different types, such as a subject, predicative (main content verb only), direct/indirect objects, complement, and a specifier. With this information, the LLM and agent may assign the most appropriate thought tokens to user responses. The intentionality/emotion/thought tokens are used by the LLM 102 by being the statistically next most likely token given a context (e.g., may include a prompt and customer conversation). The statistical weighting based on context is tuned based on the model training process which includes instances of emotion/intentionality/thought tokens. This can be generated synthetically or augmented from real world data in a way to impress internal emotion/intention/thoughts into explicit training data.

It is to be understood that the intentionality tokens 114, reasoning tokens 118, emotion token 120, and memory tokens 116 as described herein are for exemplary purposes only. According to other embodiments, various other novel tokens may be defined to introduce higher-level cognitive processes to enhance the LLM model 102. In some examples,

In some cases, the syntax used to define the thought tokens 112 may be arbitrary. In some cases, the syntax of the thought tokens 112 may be similar to the syntax of training data 108, tokens 110, or vocabulary 106 of the LLM 102. In some embodiments, the thought tokens 112 may be implemented using the syntax such as <emotion: frustrated>. In some other cases, the thought tokens 112 may be defined as tags such as <emotion>frustrated</emotion> or similar variations. Tags may be easier to implement with current LLM architectures via post-training or other approaches.

Once the thought tokens 112 are defined, the thought tokens 110 may be analyzed by the LLM 102 to incorporate the thought tokens 110 into the vocabulary 106 of the LLM 106. In some embodiments, the thought tokens may be incorporated in the LLM 102 by using contextual embeddings. Attention weights may be used to prioritize some thought tokens or sub-thought tokens over others. These novel tokens can be added to the SFT (supervised-fine-tuning) dataset as well as the unsupervised pre-training process through augmentation or synthetic data generation (either taking existing real-world data and augmenting it with intentionality/thought/emotion tokens or through pure synthetic structured or unstructured data). Once the thought tokens 110 are incorporated in the vocabulary 106, the training data 108 of the LLM 102 may be augmented with examples that implement the though tokens to capture higher-level cognitive processes. In some embodiments, the augmenting of training data 108 with examples including the thought tokens 110 may be performed manually, synthetically, or algorithmically. After the examples are included in the training data 108, the LLM 102 is adapted based on the modified training data. For example, the LLM 102 may be adapted by modifying the parameters of the LLM 102 at runtime to effectively utilize thought tokens 110 during inference.

In some embodiments, the LLM 102 may be adapted with the newly added thought tokens 110 to the vocabulary 106 by connecting the cognitive structures of the thought tokens 110 to the cognitive structure of the model architecture 104. This connection allows the thought tokens 110 to enhance the LLM 102 with higher-level cognitive processes. In some embodiments, the LLM 102 may be enhanced through expanding the underlying vocabulary and including new training data with the novel tokens. In such cases, the novel tokens are included in augmented data and the original vocabulary before pretraining, or for minimal effort, could have existing tokens represent a pseudo-new-token without the need for increasing the underlying vocabulary.

In some embodiments, a plurality of the thought tokens 110 may be arranged in a hierarchical structure, flat structure, or a recursive structure to enhance the thought process of an LLM 102.

According to some embodiments, the hierarchical structure allows the LLM 102 to break down complex thoughts into simpler components, making it easier to reason about them. The hierarchical structure may be represented as follows:

```
             <thought: problem-solving><reason: identify the key variables>
                      <reason: formulate an equation.></thought>
```

The hierarchical structure of the thought tokens 110 models the thought process of solving a problem. The high-level <thought: problem-solving> thought token includes sub-tokens representing specific steps in the reasoning process. The <reason: identify the key variables> and <reason: formulate an equation.> tokens are nested with the <thought: problem-solving> token, providing a structured representation of the thought process.

According to some embodiments, the recursive structure enables the LLM 102 to handle nested reasoning processes, allowing he LLM 102 to tackle increasingly complex problems. The recursive structure may be represented as follows:

```
         <thought: complex-reasoning><thought: simplify-the-problem><reason:
         break-down-into-parts><reason: solve-each-part></thought></thought>
 
```

The recursive structure of thought tokens 110 structure allows the LLM 102 to reason about complex problems by breaking them down into simpler components and solving each part step-by-step. The <thought: complex-reasoning> token contains a nested <thought: simplify-the-problem> token, which in turn contains sub-tokens representing specific steps in the reasoning process.

According to some other embodiments, the flat structure is a linear arrangement of tokens where each thought token 110 represents a single cognitive process. The flat structure may be represented as follows:

```
 <reason>identify the key variables</reason> and <reason>formulate an equation</reason>
```

As will be clear, the recursive structure, flat structure, and the hierarchical structures are not exhaustive and are presented merely for exemplary purposes. In some cases, higher level cognitive paradigms such as Soar, ACT-R, CLARION, EPIC, and CoT can be implemented this way. In some other embodiments, another more abstract attention layer can also be added to the wrapped thought token reasoning process. In some embodiments, the LLM 102 of FIG. 1 also includes a model architecture 104. The model architecture 104 may be a neural network design that processes input received from the and generates a corresponding output. For example, in case of the LLM 102, the model architecture 104 may be a transformer model.

The model architecture 104 may comprise multiple layers that progressively learn complex features of the language of the LLM 102 (e.g., the English language). In some embodiments, the model architecture 104 includes an attention mechanism, which allows the LLM 102 to focus on relevant parts of the input text, even if the relevant parts are far back in a sequence of words received as part of a query from the user at the I/O device 124.

In some examples, at each layer of the model architecture 104 of the LLM 102, tokens pass through several processing steps that adjust how much focus (or "weight") is given to different tokens based on context. For example, in the sentence "The cat sat on the mat," the word "cat" might make the model pay more attention to "mat" to generate a coherent response. The output from one layer is passed to the next layer until the last layer outputs the final response.

In some embodiments, when a prompt is received from a user at the I/O device 124, the LLM 102 tokenizes the received prompt into various vocabulary tokens. These input vocabulary tokens are then processed through the multiple layers of the model architecture 104 of the LLM 102, where each layer adds deeper understanding based on context and learned patterns.

In accordance with some embodiments, the LLM 102 may be retrained on the new training data that includes the thought tokens as described above. The thought tokens 110 that are incorporated in the LLM 102 are able to enhance the LLM 102 with higher-level cognitive ability. Not only is the LLM 102 able to use knowledge to predict the best possible next words or phrases to create a response to the query, but the LLM 102, including the thought tokens 110, is also able to enhance the function of the LLM 102 by introducing higher-level cognitive processes such as reasoning, thought prediction through logical progression, and intentionality.

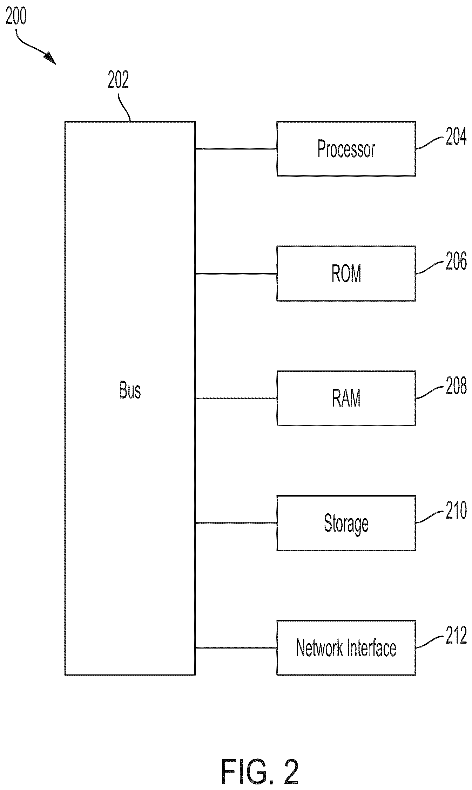

FIG. 2 is a block diagram of an exemplary system or device 200 within the environment 100 such as the controller 120. The system 200 includes a processor 204, such as a central processing unit (CPU), and/or logic, which executes computer executable instructions for performing the functions, processes, and/or methods described herein. In some examples, the computer executable instructions are locally stored and accessed from a non-transitory computer readable medium, such as storage 210, which may be a hard drive or flash drive. Read Only Memory (ROM) 206 includes computer executable instructions for initializing the processor 204, while the random-access memory (RAM) 208 is the main memory for loading and processing instructions executed by the processor 204. The network interface 212 may connect to a wired network or cellular network and to a local area network or wide area network. The system 200 may also include a bus 202 that connects the processor 204, ROM 206, RAM 208, storage 210, and/or the network interface 212. The components within the system 200 may use the bus 202 to communicate with each other. The components within the system 200 are merely exemplary and might not be inclusive of every component within the controller 120. Additionally, and/or alternatively, the system 200 may further include components that might not be included within every entity of environment 100. For instance, in some examples, the controller 120 might not include a bus 202.

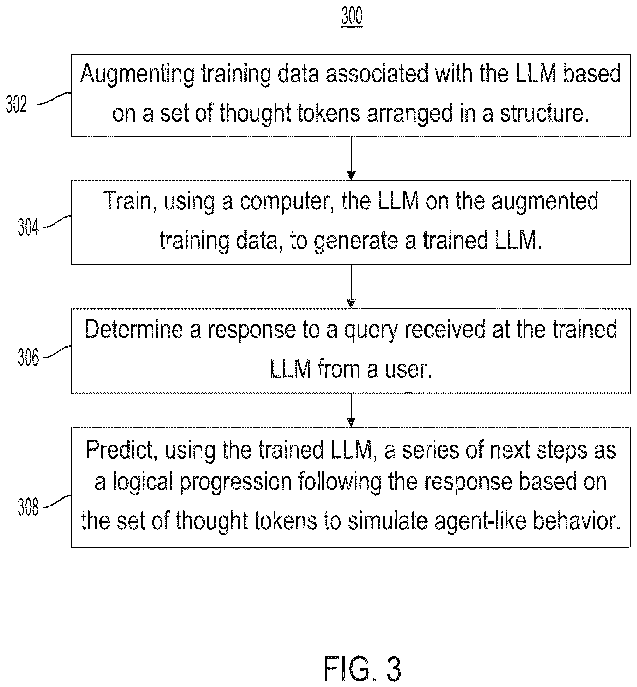

FIG. 3 illustrates an exemplary process to add thought tokens wo a large language model (LLM), according to embodiments of the present disclosure. In some embodiments, the process 300 may be performed by the environment 100 of FIG. 1. However, it will be recognized that any of the following blocks may be performed in any suitable order and that the process 300 may be performed in any environment and by any suitable computing device and/or controller. For instance, the process 300 may also be performed by the LLM 102 shown in FIG. 1.

At 302, the training data associated with the LLM is augmented based on a set of thought tokens arranged in a structure. For example, the set of tokens may include tokens that correspond to various cognitive processes, such as reasoning, memory, intentionality, and emotion. Once the thought tokens 112 are defined, the thought tokens 110 may be analyzed by the LLM 102 to incorporate the thought tokens 110 into the vocabulary 106 of the LLM 106. In some embodiments, the thought tokens may be incorporated in the LLM 102 by using contextual embeddings.

At 304, the LLM is trained on the augmented data using a computer, to generate a trained LLM. In some embodiments, training the LLM 102 involves adapting the LLM 102 with the newly added thought tokens 110 to the vocabulary 106 by connecting the cognitive structures of the thought tokens 110 to the cognitive structure of the model architecture 104.

At 306, the trained LLM determines a response to a query received from the user.

At 308, the trained LLM predicts a series of next steps as a logical progression following the response based on the set of thought tokens to simulate agent-like behavior. For example, the thought tokens 110 that are incorporated in the LLM 102 are able to enhance the LLM 102 with higher-level cognitive ability. Not only is the LLM 102 able to use knowledge to predict the best possible next words or phrases to create a response to the query, but the LLM 102, including the thought tokens 110, is also able to enhance the function of the LLM 102 by introducing higher-level cognitive processes such as reasoning, thought prediction through logical progression, and intentionality.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for enhancing a large-language model (LLM) with next thought generation, the method comprising:
augmenting training data associated with the LLM based on a set of thought tokens arranged in a structure;
training, using a computer, the LLM on the augmented training data, to generate a trained LLM;
determining a response to a query received at the trained LLM from a user; and
predicting, using the trained LLM, a series of next steps as a logical progression following the response based on the set of thought tokens to simulate agent-like behavior.

2. The method of claim 1, wherein the set of thought tokens are arranged in a hierarchical structure, and wherein the hierarchical structure divides the query received at the LLM into smaller tasks, which are then used by the LLM to predict the series of next steps.

3. The method of claim 1 or 2, wherein the set of thought tokens are arranged in a nested recursive structure, and wherein the recursive structure divides the query received at the LLM into smaller tasks, which are then used by the LLM to predict the series of next steps.

4. The method of one of the previous claims, wherein the training data is augmented by expanding the underlying vocabulary of the LLM.

5. The method of claim 4, wherein the training data is augmented by modifying existing tokens with the set of thought tokens to generate pseudo-new-tokens.

6. The method of one of the previous claims, wherein the LLM is augmented by incorporating the set of thought tokens in training data of the LLM using contextual embeddings.

7. The method of one of the previous claims, further comprising:
assigning a respective weight to each of the set of tokens; and
prioritizing the set of tokens based on the respective weights assigned to each of the set of tokens.

8. The method of claim 7, wherein augmenting the training data comprises adding the set of tokens to a supervised-fine-tuning dataset of the LLM.

9. A system for enhancing a large-language model (LLM) with next thought generation, the system comprising:
a controller configured to:
augment training data associated with the LLM based on a set of thought tokens arranged in a structure;
train, using a computer, the LLM on the augmented training data, to generate a trained LLM;
determine a response to a query received at the trained LLM from a user; and
predict, using the trained LLM, a series of next steps as a logical progression following the response based on the set of thought tokens to simulate agent-like behavior.

10. The system of claim 9, wherein the set of thought tokens are arranged in a hierarchical structure, and wherein the hierarchical structure divides the query received at the LLM into smaller tasks, which are then used by the LLM to predict the series of next steps.

11. The system of claim 9 or 10, wherein the set of thought tokens are arranged in a nested recursive structure, and wherein the recursive structure divides the query received at the LLM into smaller tasks, which are then used by the LLM to predict the series of next steps.

12. The system of one of claims 9 to 11, wherein the training data is augmented by expanding the underlying vocabulary of the LLM.

13. The system of claim 12, wherein the training data is augmented by modifying existing tokens with the set of thought tokens to generate pseudo-new-tokens.

14. The system of one of claims 9 to 13, wherein the LLM is augmented by incorporating the set of thought tokens in training data of the LLM using contextual embeddings.

15. A tangible, non-transitory computer-readable medium for enhancing a large-language model (LLM) with next thought generation, the computer-readable medium having instructions thereon, which, upon being executed by one or more processors, provides for execution of the following steps:
augmenting training data associated with the LLM based on a set of thought tokens arranged in a structure;
training, using a computer, the LLM on the augmented training data, to generate a trained LLM;
determining a response to a query received at the trained LLM from a user; and
predicting, using the trained LLM, a series of next steps as a logical progression following the response based on the set of thought tokens to simulate agent-like behavior.
